# EUROPEAN PATENT APPLICATION

(11) **EP 0 909 013 A2**
(43) Date of publication of application: **14.04.1999**
(21) Application number: 98117735.5
(22) Date of filing: 18.09.1998
(51) Int. Cl.: H02P 6/18, H02P 6/22

(54) **Single-phase synchronous motor with permanent-magnet rotor and method of driving it**

(30) Priority: 10.10.1997 IT MI972307
(71) Applicant: SISME IMMOBILIARE S.p.A., 22077 Olgiate Comasco (Como) (IT)
(72) Inventor: Greco, Bruno, 21020 Casciago (Varese) (IT); Oljaca, Miroslav, 21040 Gerenzano (Varese) (IT)
(74) Representative: Ripamonti, Enrico, Dr. Ing.

(57) **Abstract**

A single-phase synchronous motor with a permanent-magnet rotor and a stator provided with an exciter winding and pole pieces defining with the rotor an asymmetric air gap. The motor is driven by a static switch controlled by electronic driver means. The drive method comprises an initial stage of identifying the position of the rotor poles relative to the stator pole pieces by means of a succession of electric pulses of increasing intensity and alternating sign, until one of these saturates the stator magnetic circuit.

## Description

This invention relates generally to a single-phase synchronous motor with a permanent-magnet rotor and asymmetric air gap provided with driver means, and a drive method therefor.

The main object of the invention is to drive with the aid of an electronic driver circuit a single-phase synchronous permanent-magnet motor provided with a single winding formed by solenoid coils and with an asymmetric air gap, without the need to use rotor position sensors. A subsidiary object of the invention is to provide a motor of the specified type suitable for forming part of a motor/pump unit for dishwashers and the like, or more generally for applications requiring low power and involving low inertial loads.

Our previous patent applications M193A001139, M193A002199, MI94A000941, MI94A002635 and MI97A000913 describe the starting in the chosen direction, and the operation, of a low-power single-phase synchronous permanent-magnet motor for operating low inertial loads, in particular for a motor with a single winding formed from solenoid coils, with an air gap of special configuration and with the aid of an electronic driver circuit comprising one or more rotor position sensors, and for a motor with two windings differing in phase by 90 electrical degrees which is formed with stator laminations having distributed recesses but without rotor position sensors.

The novel and special aspects of the invention are defined in the accompanying claims.

The invention will be more apparent from the detailed description of a preferred embodiment thereof described hereinafter by way of non-limiting example and illustrated on the accompanying drawings, on which:
Figure 1 is a schematic side view of a single-phase synchronous electric motor with a permanent-magnet rotor and a single winding formed from solenoid coils;
Figure 2 shows the upper part of the motor of Figure 1 on an enlarged scale;
Figure 3 is a schematic indication of the motor intended to facilitate the understanding of some functional aspects of the motor;
Figure 4 shows a conventional hysteresis cycle for a ferromagnetic material;
Figure 5 is a schematic representation of the electric motor and the relative driver circuit;
Figure 6 is a graph showing the variation in pulse currents circulating through the motor, and the state of the static switch during the identification of rotor polarity;
Figure 7 is a graph relative to the variation in pulse currents circulating through the motor during the identification of rotor polarity;
Figure 8 is a schematic representation of motor a powering circuit, with the motor shown in the form of equivalent components;
Figure 9 shows the variation of the induced electromotive force (Et) and of its derivative as a function of time, these representing parameters which enable the instantaneous rotor position to be identified;
Figure 10 shows the block scheme of the electronic driver circuit for the electric motor.

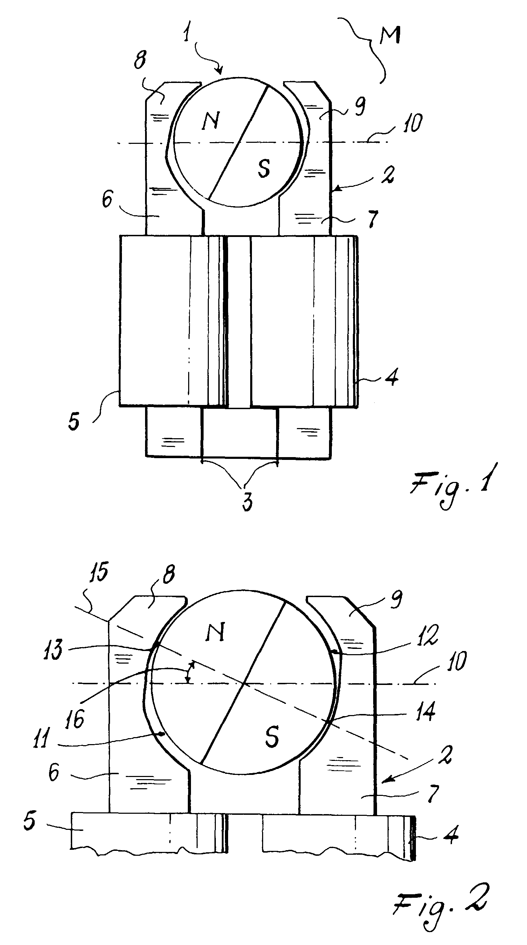

A single-phase synchronous motor M with one winding 3 is shown in Figure 1. Its rotor 1 is of permanent-magnet type and is located between the pole pieces 8, 9 of a stator pack 2 of substantially U configuration, and on which the coils 4 and 5 of the winding 3 are located. In this respect, for constructional simplicity the stator winding 3 can be divided into parts represented by the coils 4 and 5 positioned on the two different columns or arms 6 and 7 of the stator pack. The polar axis of the stator is indicated by 10. The air gap is of asymmetric type. In this respect, having available only one winding 3, such an air gap has to be used in order to rotate the permanent-magnet rotor 1 in the desired direction (clockwise in this example). Figures 1 and 2 show one possible constructional form of this air gap. The different air gap dimensions at the two pole pieces 8 and 9 can be noted. The air gap dimensions at 11 and 12 are in fact greater than those at 13 and 14. Because of this difference a force of attraction is created which, when the motor is unexcited, aligns the magnetic axis of the rotor along the axis 15 of Figure 2 passing through the centre of the reduced air gap regions 13, 14. As can be seen from Figure 2, the polar axis 10 of the stator 2 and the polar axis 15 of the rotor form an angle 16. This angle 16 represents the angle at which the permanent-magnet rotor 1 becomes positioned when at rest, and is known as the "parking angle". The absolute value of the angle 16 is defined exclusively by the shape of the air gap used.

On commencement, when the rotor is at rest and the motor unpowered, the angular position of the permanent-magnet rotor 1 is known, ie the angle 16 is known, but it is not known which rotor pole faces for example the pole piece 8. In this respect, the N-S magnetic axis of the rotor 1 is certainly aligned with the parking axis 15, but the north pole could face the pole piece 8 or the pole piece 9. To ensure that the permanent-magnet rotor 1 starts in the chosen direction it is necessary to know, prior to starting, not only its angular position, ie the angle 16, but also the direction or spatial position of the rotor poles. A description will now be given of how the invention enables the direction or spatial position of the poles of the permanent-magnet rotor to be identified.

To explain the physical principle on which this identification is based, the magnetic circuit of the motor of Figure 1, shown schematically in Figure 3, must be analyzed. The motor magnetic circuit is composed of the stator pack formed from magnetic laminations, the permanent-magnet rotor 1 separated from the stator pack by the air gap here indicated by 17, and the stator winding 3. The magnetic flux φ in the magnetic circuit is defined by the flux line 18.

When the current I is zero, the magnetic flux φ is exclusively that produced by the permanent magnets of the rotor 1 in the rest position.

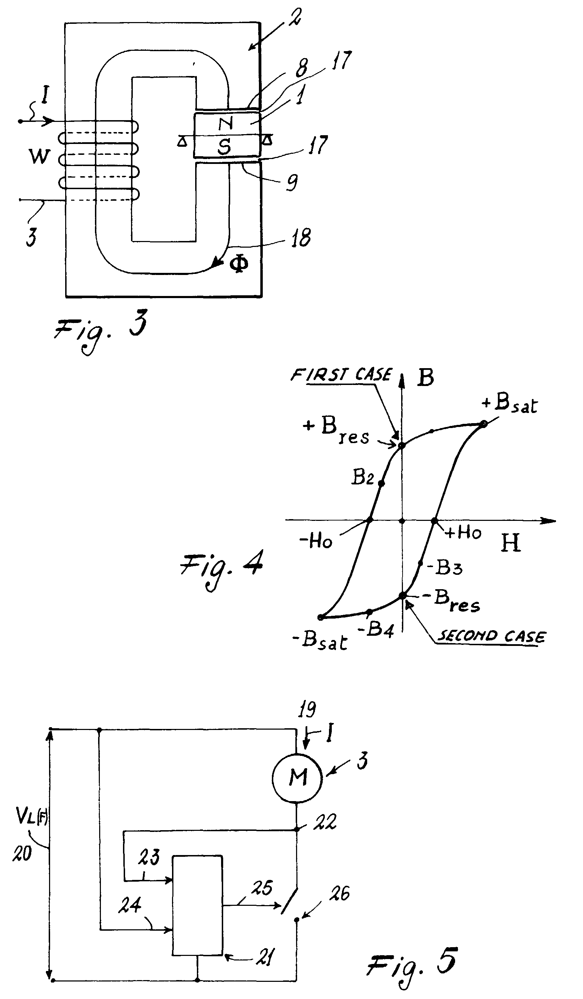

Figure 4 shows the hysteresis cycle in coordinates B (magnetic induction) and H (magnetic force) of the equivalent magnetic circuit of Figure 3 as the amplitude and polarity of the current I vary. We shall define two cases: the first exists when the permanent-magnet rotor 1 is in the parked position with the north pole (N) facing the pole piece 8 (see Figure 2) and the current I is zero: the operating point of the cycle is positioned at +Bres in this case. The second case exists when the permanent-magnet rotor 1 is in the parked position with the south pole (S) facing the pole piece 8, ie its angular position has changed through 180 electrical degrees: the flux applied to the equivalent magnetic circuit is then negative and the operating point is at -Bres, again with zero current I.

In the first case, again with the rotor at rest in the parked position, when the positive current I is applied to the stator winding 3 (see Figure 3), the operating point (on Figure 4) +Bres moves towards the point +Bsat passing through the point B1, and the magnetic flux φ caused by the current I passing through the stator winding 3 is added to the flux produced by the permanent-magnet rotor 1, they being concurring. With increasing current I, the absolute value of the resultant magnetic flux φ becomes increasingly higher under these conditions, until a value is reached such as to saturate the magnetic circuit, namely the point Bsat. On reversing the current direction (I negative) the opposite occurs, ie the operating point (on Figure 4) shifts from the point +Bres towards the point -Bsat, passing through the point B2. In this case, the now opposing flux of the permanent-magnet rotor is subtracted from the current passing through the stator winding 3. The absolute value of the resultant magnetic flux as the negative current I increases becomes increasingly lower under these conditions until induction reaches the value zero, ie the point -Ho.

In the second case, when positive current I is applied to the stator winding 3, the operating point (on Figure 4) -Bres shifts towards the point +Bsat passing through the point -B3. In this case the flux of the permanent-magnet rotor 1 is subtracted from the magnetic flux caused by the current I passing through the stator winding 3. The absolute value of the resultant magnetic flux 18 as the current I increases becomes increasingly lower under these conditions until induction reaches the value zero, ie the point +Ho. If instead negative current I is applied to the stator winding 3, the opposite occurs. The operating point (on Figure 4) shifts from the point -Bres towards the point -Bsat passing through the point -B4, The magnetic flux caused by the current I passing through the stator winding 3 is added to the flux of the permanent-magnet rotor 1. The absolute value of the resultant magnetic flux as the current I increases becomes increasingly higher until the saturation value of the magnetic circuit is reached, ie the point -Bsat.

The method for identifying the position of the permanent-magnet rotor 1 without the aid of sensors is based on the aforesaid principle, as described hereinafter.

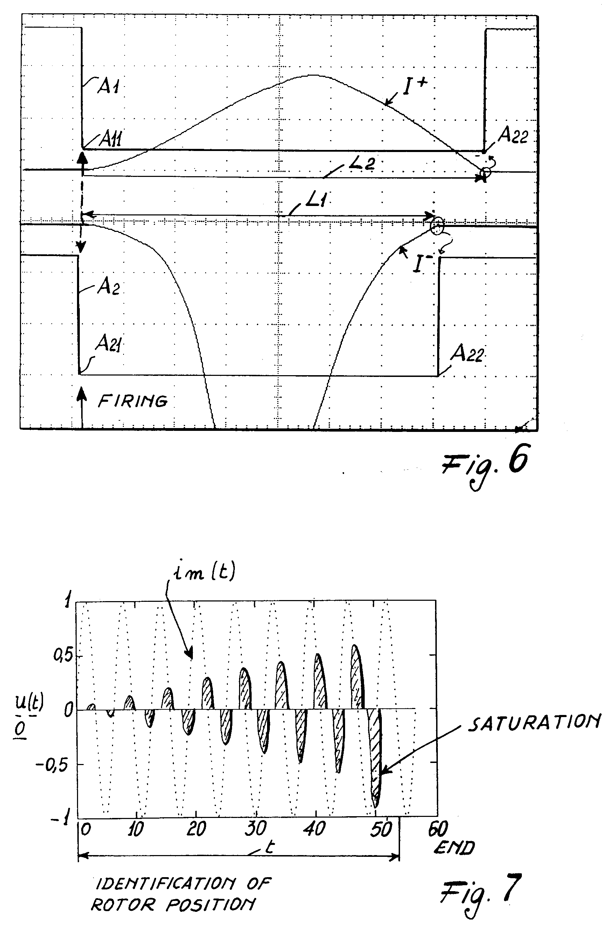

An electronic control circuit 21 (for example a microprocessor) which enables the angular position of the permanent-magnet rotor 1 to be identified is shown schematically in Figure 5. The motor winding 3 is connected to an a.c. voltage generator 20, for example a 50 or 60 Hz electricity mains V, via a static switch 26. The voltage applied to the winding 3 causes current I to flow therein, also defining its sign (positive or negative). The control circuit 21 emits a signal 25 along the firing line to close the static switch (triac) 26. If the mains voltage has a positive value, on closing the switch a positive current pulse is generated within the winding 3, whereas if the mains voltage has a negative value a negative current pulse is generated within the winding. To obtain correct information regarding the sign (positive or negative) of the mains voltage, the signal originating from the line 24 and representing the mains voltage is used. In this manner, with exact knowledge of the sign (positive or negative) of the mains voltage the electronic circuit 21 is able to apply positive or negative pulses to the winding 3 to close the electronic switch 26 by means of the control signal in the line 25.

By virtue of its nature the static switch (triac) 26 cannot be considered as an ideal switch, but because of its individual characteristics it can be considered as a resistor during the conduction stage. The voltage drop across the static switch is hence proportional to the current passing through it. It is therefore permissible to measure the voltage across the static switch instead of the current through the winding, this being done via the line 23.

Knowing with certainty the sign of the supply voltage 20 by means of the signal of the line 24, positive or negative voltage pulses can be applied by lagging the mains voltage to the winding 3 following a given algorithm incorporated in the circuit 21. These voltage pulses generate a corresponding current pulse of equal sign. From Figure 4 it can be seen that for the two possible positions of the parked rotor 1, for positive and negative voltages of low value there is no difference in behaviour. If the operating point is around the point -Bres, as the motor magnetic circuit is not saturated its inductance is constant. However if the positive or negative voltage applied to the winding is increased, the operating point begins to move increasingly further from -Bres. When the negative current exceeds a certain value, the magnetic circuit becomes saturated (passing to -Bsat) so drastically lowering its inductance. For the same applied positive voltage the circuit remains unsaturated, and consequently maintains its inductance at relatively high levels. There hence commences a certain behaviour difference between positive and negative voltage in terms of current generated in the winding. Generally, for low voltages, as the magnetic circuit maintains the same inductance, its behaviour is the same and the currents remain similar in form and value. On decreasing the lag angle (by acting on the static switch via the line 25), ie applying ever increasing voltages and hence currents of increasing amplitude, the magnetic circuit begins to become saturated when these currents are negative (in the case under consideration where the operating point is -Bres). There is also a difference of amplitude and duration between the positive and negative current pulses.

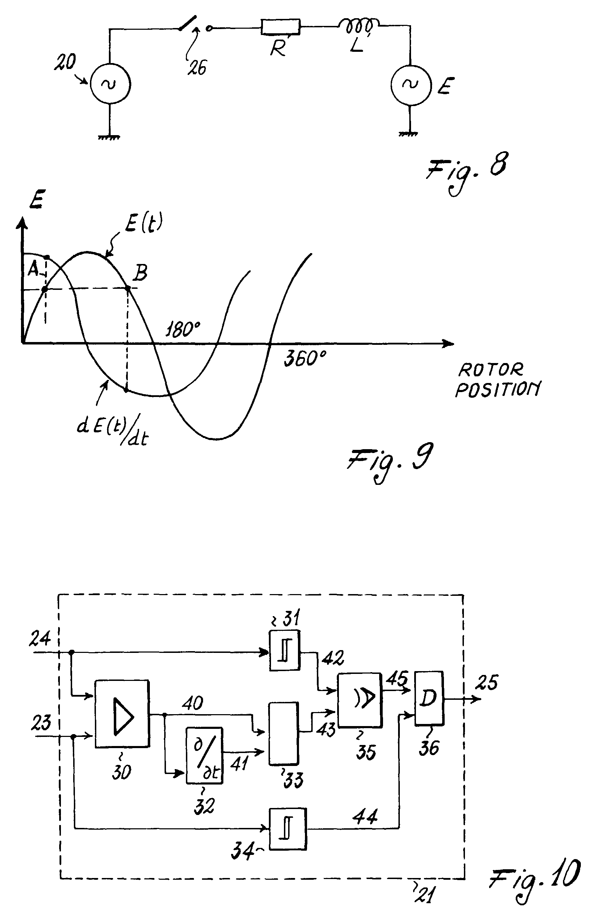

As indicated in Figure 6, which shows a diagram in which the horizontal axis represents time and the vertical axis represents current intensity, the curves A₁ and A₂ represent the states of the static switch 26 and the points A₁₁ and A₁₂, A₂₁ and A₂₂ the passages of state (firing A₁₁ and A₂₁, extinction A₁₂ and ₂₂, and the curves I⁺ and I⁻ represent the positive and respectively negative current pulses flowing through the motor winding. In Figure 6 the two pulses I⁺ and I⁻ are shown superposed, but in reality they are displaced along the time axis one relative to the other, with the pulse I⁻ leading I⁺.

It will be noted from this figure that the negative current pulse I⁻ has a higher peak, and is obviously the result of a magnetic circuit in saturation (low inductance), whereas the positive current pulse I⁺, with a lower peak, is the result of an unsaturated magnetic circuit. Again in Figure 6 it can be seen that the negative current pulse I⁻ has a duration L₁ which is less than the duration L₂ of the positive current pulse.

It is clear at this point (and with reference to the aforedescribed example) that the magnetic field of the rotor concurs with that generated by the negative current pulse I⁻flowing through the winding 3, so that their intensities are added together. This means that to one pole of a given name present on the stator pole pieces 8, 9 there corresponds a rotor pole of opposite name. For further clarification, if the considered current pulse I⁻ has produced (Figure 2) on the pole piece 8 a SOUTH pole and hence a NORTH pole on the opposite pole piece 9, the spatial position of the rotor poles will be that shown in Figures 1 and 2.

If the opposite were to occur, ie if the saturation were produced by a positive current pulse, the rotor position would be opposite, ie displaced through 180° from that shown in Figures 1 and 2.

By measuring the voltage across the static switch 26 by means of the signal through the line 23, and knowing the internal resistance of the static switch (triac), or the current pulse peak, or the duration of the current pulse I applied to the winding 3, the initial position of the permanent-magnet rotor 1 can be determined.

The algorithm to be applied for identifying the precise position of the rotor when this is parked is incorporated in the electronic control circuit 21 (for example a microprocessor). By means of the signal through the line 24 the sign (positive or negative) of the feed voltage 20 and the passage through zero of the a.c. voltage wave can be determined. In the algorithm, which comprises several successive steps, the first step comprises waiting for the feed voltage 20 to become positive after passing through zero, then applying before closure of the static switch 26 a very large feed voltage lag angle to obtain a very low current. On switch closure a positive current pulse 19 arises in the stator winding. By measuring the voltage across the static switch by means of the signal through the line 23, the duration and/or intensity of the positive current pulse I is determined. During the period in which the low-value current passes through the static switch, the voltage across it assumes a very low value. When the current pulse becomes zero, the voltage across the static switch reassumes a high value and equal to the mains voltage. It is hence possible to determine the time interval during which the voltage remains at reduced value and hence determine the duration of the current pulse.

The algorithm proceeds by waiting for the feed voltage 20 to become negative. After the voltage passes through zero the same lag angle is applied as that previously applied to the feed voltage before closure of the static switch 26. On switch closure there is a negative current pulse through the stator winding 3. By measuring in the same manner as before, the duration of the negative current pulse is known. Having used the same lag angle both for the positive and for the negative voltage implies that the positive and negative voltages have the same value. As the lag angles are large, the voltages applied across the stator winding 3 are low, and the current also remains low. The current pulse durations are identical as a result of the low currents, and, as already explained, the magnetic circuit has not gone into saturation as already explained. On termination of this step, the next step consists of decreasing the lag angle so as to apply a higher voltage. The positive and negative currents are consequently higher. If there is no large difference between the positive and negative pulse durations the lag angle is further decreased (hence increasing the voltage across the winding) until the current passing through the stator winding becomes sufficiently high to put the magnetic circuit into saturation. When saturation of the magnetic circuit occurs, the result is a different current pulse duration. The current pulse duration, measured by means of the signal along the line 23, is different for the positive pulse and the negative pulse (Figure 6). The current pulse which puts the magnetic circuit into saturation has a shorter duration than the pulse of opposite sign. At this point the rotor position identification stage terminates. The current pulse sequence applied to the stator winding is shown in Figure 7.

The said voltage pulses must be applied in increasing order to ensure correct measurement independently of any variation in the different parameters. The feed voltage 20 could have a very wide range such that the same lag angle results in various current values. Other parameters such as variation in the winding resistance, rotor magnetic flux, temperature at the motor etc., influence the size of the saturation current, ie they directly influence the applied voltage. This algorithm, which step by step increases the current pulses from a minimum value to one which puts the magnetic circuit in saturation, has been used to take account of possible differences in motors and working conditions. In this manner a rotor position measurement is obtained which is very accurate and reliable against any possible disturbances present in the practical application.

After identifying the rotor pole position it proceeds by starting the rotor in the chosen direction. In the situation which precedes the start, the rotor is in the parked position with all movement absent and with the rotor pole direction known. To move the rotor from its parked position, ie to start it, voltage pulses which do not put the magnetic circuit into saturation have to be applied. By means of the signal along the line 24, which indicates the sign (positive or negative) of the feed voltage and its passage through zero, the information required to close the static switch 26 is obtained. Having all the required information, the maximum available voltage can be applied, ie to achieve maximum current in a half-period within the motor winding. In this manner maximum energy is supplied to the rotor. On the basis of the motor characteristics and load, the number of pulses required to start the motor is predetermined by a specific study on prototypes. The number of applied pulses must accelerate the rotor and shift it through 180 electrical degrees from its initial position. In the described example, in which the position of the rotor poles is that of Figures 1 and 2, the stator is fed with a succession of pulses, all of the same sign, such as to produce at the stator pole pieces, poles of the same name as that of the rotor poles, until the axis 15 has rotated through more than 90 degrees.

The rotor position at this moment is unknown and the rotor rotates in the desired direction imposed by the particular shape of the asymmetric air gap. In the case of Figures 1 and 2 the direction is clockwise.

To subsequently synchronize and operate the permanent-magnet motor, information must be obtained relative to: the sign (positive or negative) of the feed voltage 20, the conduction state of the motor static switch 26, and the complete position of the rotor. Two of these items of information can be obtained by direct measurement. The feed voltage polarity is obtained by directly measuring the voltage, using only the sign of the measured value. The conduction state of the static switch can be known by directly measuring the voltage across the switch, or alternatively by measuring the voltage across a resistor connected in series with the switch. In present-day practical applications the rotor position is measured by one or more Hall effect sensors. This type of measurement is immediate and absolute, but involves drawbacks in positioning the sensor close to the motor, obliging the electronic control card to assume the same position. The same information can be easily obtained without using rotor position sensors as described in detail hereinafter.

Figure 8 shows the motor equivalent circuit. The voltage generator 20 (for example the electricity mains) is connected via the static switch 26 to the stator winding 3 which in this case is shown by its equivalent components. The winding resistance is indicated by R, the inductance by L and the voltage induced by the permanent-magnet rotor by E. With the static switch closed the feed voltage equals the sum of the resistive and inductive voltage drops (caused by the current I flowing though the winding), together with the voltage E induced by the moving rotor. At the moment of opening the static switch the voltage across the winding is equal to E. It is known that the induced voltage E is proportional to the rotor position and speed, hence information regarding the rotor position can be obtained by measuring this induced voltage. To obtain precise information it is however also necessary to find the derivative of the measured signal.

Figure 9 shows the variation in the measured induced voltage E against the rotor position. It can be seen that for the same value of E two different rotor positions can be found. Position A has the same induced voltage E as position B. To distinguish between one position and another the derivative of the measured signal must also be found. From Figure 9, which also shows the derivative of the measured signal, it can be seen that for position A the derivative is positive, whereas for position B the signal derivative is negative. This information is sufficient to distinguish position A from position B. To measure the voltage across the stator winding the two signals previously used (Figure 5, lines 23 and 24) are sufficient. The voltage across the winding can be obtained by subtracting the voltage across the static switch from the mains voltage. The difference between these two voltages exactly equals the voltage across the motor winding.

Using the two measurement signals (lines 23, 24), ie the voltage across the static switch 26 and the mains voltage 20, information is obtained regarding the feed voltage polarity, the static switch conduction state and the rotor position, these items of information being necessary to start and operate the permanent-magnet motor. The operating principle using these items of information is described in Italian patent 1,269,755 and in the corresponding European patent application EP-0682404. To ensure correct motor operation applying the aforesaid principle, the motor must be started in the desired direction and its speed must be other than zero.

To apply the aforesaid principle, various possibilities exist. Motor control can be achieved using various techniques, and the electronic circuit can be constructed either using discrete components or introducing a microprocessor with a suitable algorithm. In our case a microprocessor is used, Figure 10 showing the block scheme of the algorithm corresponding to the control circuit 21 of Figure 5. The input signals are the voltage (line 24) of the feed generator (for example the electricity mains) 20 and the voltage (line 23) across the static switch 26.

The feed voltage signal (line 24) enters the block 31. If this voltage is positive, the output (line 24) from the block 31 is "high", whereas if it is negative the signal 42 is zero. The block 31 hence creates from the mains voltage signal a digital signal of values "one" and "zero" depending on its polarity. The voltage across the static switch 26 enters the block 34 along the line 23. The purpose of this block is to process the signal from the line 23 such that when the static switch is open, the voltage across it is equal to mains voltage, ie different from zero, and the signal (line 44) is "high". When the switch is closed, the voltage across it is nearly zero and the signal (line 44) is zero.

In the block 30, the signal of line 23, ie the voltage across the static switch, is subtracted from the signal of line 24 representing the mains voltage. The resultant signal along line 40 is the difference between the two signals of lines 23 and 24 and represents the voltage induced by the moving rotor in the stator winding at the moments in which its current is zero (switch 26 open). The signal of line 40 representative of the induced voltage passes to the block 32 which calculates its derivative with time, this being represented by the signal of line 41. The signals of lines 40, 41 enter the block 33 to obtain the absolute angular position of the rotor as an output signal along the line 43.

The signals of lines 42 and 43, which contain the information relative to the sign of the mains voltage and to the absolute position of the rotor, enter the block 35 which performs the "XOR" function already described in the aforesaid preceding Italian patent. The output of the block 35 is a signal (line 45), which together with the signal (line 44) relative to the conduction state of the static switch enters the block 36 which performs the "AND" function. When the sign of the mains voltage and the identified position of the rotor create the condition for closure of the static switch 26, the signal of line 44 enables it only if the static switch is open. The output of the block 36 provides the control signal 25 for closing the static switch 26 and hence for powering the motor.

## Claims

1. A method for driving, by means of a static switch controlled by driver means, a single-phase synchronous motor with a permanent-magnet rotor and a stator provided with an exciter winding and pole pieces defining with the rotor an asymmetric air gap, characterised by initially, with the rotor at rest, identifying the position of the rotor poles relative to the stator pole pieces by driving the static switch in such a manner as to excite the stator winding with a succession of voltage pulses of increasing intensity and alternating sign, where for a voltage pulse of given sign there corresponds a voltage pulse of opposite sign and equal intensity, until a pulse of known sign, by determining magnetic saturation of the stator, indicates that the stator poles generated concur with the rotor poles, which are hence identified to subsequently allow the motor to be driven for its starting and for attaining and maintaining its synchronization speed.

2. A method as claimed in claim 1, wherein magnetic saturation is identified as an increase in the amplitude of the resultant current peak or as duration of the saturating current pulse.

3. A method as claimed in claim 1 or claims 1 and 2, wherein the initial step in the starting procedure comprises driving the static switch in such a manner as to excite the stator winding with a succession of voltage pulses of equal sign chosen in such a manner as to create repulsive forces between the rotor, the polarity of which is known, and the stator, until an angular rotor movement of at least greater than 90° is obtained.

4. A method as claimed in claim 1 or claims 1 and 2 or claims 1, 2, 3, wherein the exciter pulses for bringing the motor to its synchronization speed and maintaining it thereat are selectively impressed on the basis of the angular position of the moving rotor and the sign of the mains voltage, the angular position of the moving rotor being determined, with the static switch open, from the voltage induced by the rotor across the exciter winding and from its derivative.

5. A method as claimed in the preceding claims, wherein the static switch is a triac.

6. A method as claimed in claims 1 and 5, wherein the intensity of the voltage pulses, suitably controlled by an electronic driver circuit, is increased by reducing the lag angle of the a.c. voltage which feeds the motor.

7. A method for identifying the position of the rotor poles relative to the stator pole pieces in a single-phase synchronous motor with a permanent-magnet rotor and a stator provided with an exciter winding and pole pieces defining with the rotor an asymmetric air gap, the motor being driven by a static switch (triac) controlled by driver means, characterised in that with the motor at rest the static switch is driven in such a manner as to excite the stator winding with a succession of electric pulses of increasing intensity and alternating sign, where for a pulse of given sign there corresponds a pulse of opposite sign and equal intensity, until a pulse of known sign, by determining magnetic saturation of the stator, indicates that the stator poles produced concur with the rotor poles.

8. A method as claimed in claim 7, wherein magnetic saturation is identified as an increase in the amplitude of the resultant current peak or as duration of the saturating current pulse.

9. A single-phase synchronous motor with a permanent-magnet rotor and a stator provided with an exciter winding and pole pieces defining with the rotor an asymmetric air gap, the motor being driven by a static switch controlled by electronic driver means, characterised in that the motor is driven in accordance with one or more of the preceding claims.

10. A motor as claimed in claim 9, wherein the driver means is a microprocessor, and the static switch is a triac.
